# EUROPEAN PATENT APPLICATION

(11) **EP 2 378 823 A2**
(43) Date of publication of application: **19.10.2011**
(21) Application number: 11162619.8
(22) Date of filing: 15.04.2011
(51) Int. Cl.: H04W 64/00, H04W 36/00

(54) **User Equipment and Server System for Updating Data Relating to Fixed Wireless Nodes**

(30) Priority: 15.04.2010 GB 1006308; 01.04.2011 KR 20110030247
(71) Applicant: SAMSUNG ELECTRONICS CO., LTD., Suwon-si Gyeonggi-do 442-742 (KR)
(72) Inventor: Khandelia, Ankur, 442-742, Gyeonggi-do (KR); Azhapilli, Rajiv, 442-742, Gyeonggi-do (KR)
(74) Representative: Jenkins, Richard Gavin

(57) **Abstract**

A User Equipment (UE) for use in a wireless network including a first radio access network supporting a first radio access technology and a server system including a stored database of wireless nodes, the stored database identifying fixed wireless nodes that are geographically dispersed and that broadcast a signal including identification data. The UE includes a transceiver for communicating using the first radio access technology, a position determination unit for determining a geographical location, and a controller for accessing data derived from the stored database, monitoring broadcast signals received using the first radio access technology, upon receipt of an update request from the server system, deriving identification data and signal strength data of the fixed wireless nodes from the received broadcast signals, generating update data from the identification data, signal strength data, and geographical location data relating to the UE, and transmitting the update data to the server system.

## Description

### BACKGROUND OF THE INVENTION

### 1. Field of the Invention

The present invention relates generally to wireless networks, and more specifically, but not exclusively, to User Equipment (UE) and server system for updating data relating to fixed wireless nodes by use of the UE.

### Description of the Related Art

Wireless networks, in which a UE (e.g., a mobile handset) communicates via wireless links to fixed wireless nodes such as base stations or other wireless access points in a radio access network within a telecommunications network, have undergone rapid development through a number of generations of radio access technology. The development has involved wireless networks evolving in the fields of cellular wireless, fixed wireless access (such as Institute of Electrical and Electronics Engineers (IEEE) 802.16 WiMax), and wireless office networking (such as IEEE 802.11 WiFi), to the point where the technologies potentially offer similar capabilities, including mobility. As a result, a telecommunications network may include several radio access networks, each using a different radio access technology. In some locations the areas of coverage may overlap, but typically the coverage of deployed wireless networks is not ubiquitous, and the capabilities of a wireless network, in particular regarding available data bandwidth, vary according to location. For example, WiFi may offer potentially high bandwidth in relatively localised areas commonly referred to as "hotspots", but limited or no coverage elsewhere. By contrast, cellular radio access networks offer typically greater coverage, but typically more limited data bandwidth.

UEs have been developed for use in a telecommunication network comprising a plurality of radio access networks, equipped with radio transceivers appropriate for a variety of radio access technologies, so that a UE may be able to select a radio access network appropriate for its requirements, according to the capabilities on offer at a given location, and to hand over to another radio access network, if the location of the UE or the capabilities of the radio access networks change.

A stored database may be maintained, for example, for use to assist handover, typically identifying fixed wireless nodes operating according to a variety of radio access technologies, which are geographically dispersed, including identification data and location data for the wireless nodes. However, the stored database may become out of date, as wireless nodes are added or removed from a wireless network, or the characteristics of the wireless network change.

### SUMMARY OF THE INVENTION

The present invention is designed to address at least the problems and/or disadvantages above and to provide at least the advantages described below.

In accordance with an aspect of the present invention, a UE is provided for use in a wireless network including a first radio access network supporting communication operating according to a first radio access technology and a server system having a stored database of wireless nodes. The stored database identifies fixed wireless nodes that are geographically dispersed and that broadcast a signal including at least identification data. The UE communicates using the first radio access technology, determines a geographical location, and accesses data derived from the stored database. Upon receipt of an update request from the server system, the UE monitors broadcast signals received using the first radio access technology. The UE also derives identification data and signal strength data of fixed wireless nodes from the received broadcast signals, generates update data from at least the identification data, signal strength data, and geographical location data relating to the UE, and transmits the update data to the server system in order to update the stored database of the fixed wireless nodes.

In accordance with another aspect of the present invention, a UE is provided for use in a wireless network including a first radio access network supporting communication operating according to a first radio access technology and a server system having a stored database of wireless nodes. The stored database identifies fixed wireless nodes that are geographically dispersed and that broadcast a signal including at least identification data. The US communicates using the first radio access technology, determines a geographic location, and accesses data derived from the stored database. Upon an occurrence of at least one predetermined condition of the UE relating to availability of resources at the UE, the UE monitors broadcast signals received using the first radio access technology. The UE also derives identification data and signal strength data of fixed wireless nodes from the received broadcast signals, generates update data from at least the identification data, signal strength data, and geographic location data relating to the UE, and transmits the update data to the server system in order to update the stored database of the fixed wireless nodes.

In accordance with another aspect of the present invention, a UE is provided for use in a wireless network including a first radio access network supporting communication operating according to a first radio access technology and a server system having a stored database of wireless nodes. The stored database identifies fixed wireless nodes that are geographically dispersed and that broadcast a signal including at least identification data. The UE communicates using the first radio access technology, determines a geographic location, and accesses data derived from the stored database. The UE monitors broadcast signals received using the first radio access technology, derives identification data and signal strength data of fixed wireless nodes from the received broadcast signals, generates update data from at least the identification data, signal strength data, and geographic location data relating to the UE, and transmits the update data to the server system in order to update the stored database of the fixed wireless nodes.

The UE determines the geographic location by processing the signal strength data, the identification data corresponding to the received broadcast signals, and data relating to a relationship between signal strength and distance.

In accordance with another aspect of the present invention, a server system is provided for use with a wireless network and a plurality of UEs. The wireless network includes a first radio access network supporting communication using a first radio access technology and the server system includes a stored database of wireless nodes. The stored database identifies fixed wireless nodes that are geographically dispersed and that broadcast a signal including at least identification data. The UEs communicate using the first radio access technology, determine a geographic location, and access data derived from the stored database. The server system selects a UE having information for updating the stored database and sends an update request to the selected UE, requesting the selected UE to monitor broadcast signals received using the first radio access technology. The selected UE derives identification data and signal strength data of fixed wireless nodes from the received broadcast signals, generates update data from at least the identification data, signal strength data, and geographic location data relating to the selected UE, and transmits the update data to the server system. The server system updates the stored database of the fixed wireless nodes using the update data.

In accordance with another aspect of the present invention, ta UE is provided for use in a wireless network. The UE determines a geographical locationusing a relative navigation systemthat estimates, by use of a sensor in the UE, the geographical location of the UE relative to a previously determined geographical location. The UE stores reference information relating to a plurality of different reference locations in a geographical area and estimates the geographical location of the UE based on the reference information.

In accordance with another aspect of the present invention, a UE is provided for use in a wireless network. The UE determines a geographical location using a navigation system. The UE compiles reference information based on a history of locations of the UE.

### BRIEF DESCRIPTION OF THE DRAWINGS

The above and other aspects, features and advantages of certain embodiments of the present invention will be more apparent from the following detailed description taken in conjunction with the accompanying drawings, in which:
FIG. 1 is a schematic diagram illustrating a wireless network including parts of a first radio access network and parts of a second radio access network according to an embodiment of the present invention;
FIG. 2 is a flow chart illustrating a method for updating a database according to an embodiment of the invention;
FIG. 3 illustrates graphical representation of a relationship between signal strength and distance from a fixed wireless node according to an embodiment of the present invention;
FIG. 4 is a flow a flow chart illustrating a method for updating a database according to an embodiment of the invention;
FIG. 5 is a flow a flow chart illustrating a method for updating a database according to an embodiment of the invention;
FIG. 6 is a schematic diagram illustrating a movement history of a UE within a building according to an embodiment of the present invention;
FIG. 7 is a flow a flow chart illustrating a method for updating a database according to an embodiment of the invention;
FIG. 8 is a schematic diagram illustrating a recorded path of a UE within a building according to an embodiment of the present invention;
FIG. 9 is a schematic diagram illustrating four recorded paths within a building according to an embodiment of the present invention;
FIG. 10 is a schematic diagram illustrating estimation of extreme points of movement within a building according to an embodiment of the present invention; and
FIG. 11 is a schematic diagram illustrating estimation of positions of internal and external walls of a building according to an embodiment of the present invention.

### DETAILED DESCRIPTION OF EMBODIMENTS OF THE INVENTION

Various embodiments of the present invention will now be described below in the context of updating a stored database of fixed wireless nodes at a Media Independent Handover (MIH) server, where the fixed wireless nodes are wireless access points in a wireless network that includes a cellular radio access network and wireless hotspots provided by fixed wireless nodes that are part of a radio access network, such as a WiFi network supporting IEEE 802.11 radio access technology.

For example, the cellular radio access network may be a Global System for Mobile communications (GSM) Enhanced Data rates for GSM Evolution (EDGE) Radio Access Network (GERAN)), a Universal Terrestrial Radio Access Network (UTRAN), or an Evolved-UTRAN (E-UTRAN) network, or a combination of these, using GERA, UTRA and E-UTRA radio access technologies, respectively. However, it will be understood the types of networks described below are only examples, and other embodiments may involve wireless networks using other radio access technologies, such as WiMax networks supporting IEEE 802.16 radio access technology. Basically, the embodiments described below are not limited to using a particular radio access technology.

Although embodiments of the present invention are described using IEEE 802.21 MIH to assist a handover between radio access networks, it will be understood that other service components for controlling handover between different radio access networks could be used in the embodiments, such as Unlicensed Mobile Access (UMA), which is also known as Generic Access Network (GAN) and provides handover between IEEE 802.11 WiFi and GERA/UTRA, and Access Network Discovery and Selection Function (ANDSF), which typically includes data management and control functionality for providing network discovery and selection assistance data. ANDSF is typically able to initiate data transfer to a UE, based on network triggers, and respond to requests from the UE.

MIH is typically used for assisting the handover of a UE between radio access networks operating according to different radio access technologies, and MIH may also be used for handover between radio access networks operating using the same radio access technology, or between access nodes within a radio access network.

MIH may typically be implemented without changing existing radio access networks, other than by the installation of MIH clients in network entities, such as UEs and wireless access nodes, and provision of the MIH server. The MIH server may also be referred to as an MIH information server.

An MIH client can make handover decisions, and typically has access to information regarding the location of the UE, and obtains information from the MIH server relating to the location and capabilities of nearby wireless access nodes, such as cellular base stations and WiFi hotspots.

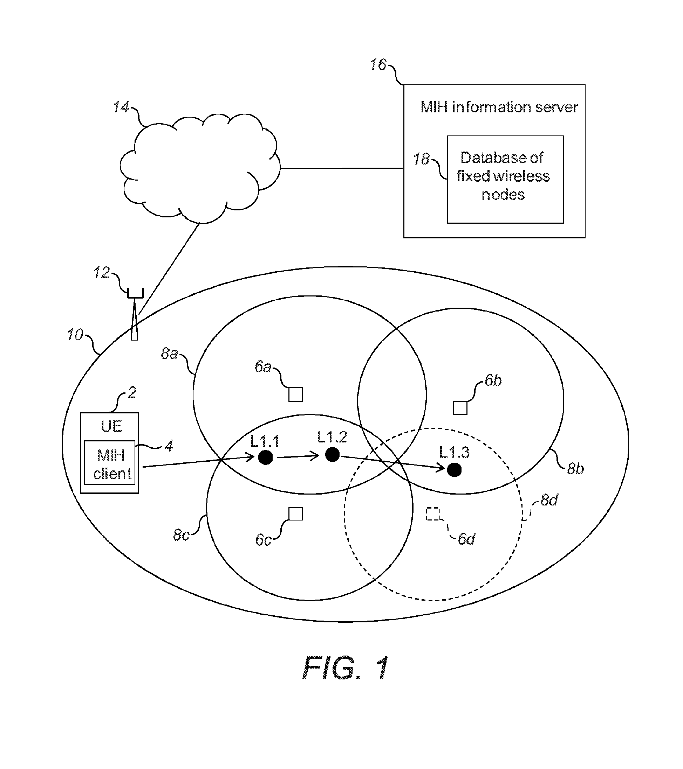

FIG. 1 is a schematic diagram illustrating a wireless network including parts of a first radio access network and parts of a second radio access network.

Referring to FIG. 1, a wireless network includes fixed wireless nodes 6a, 6b, 6c, and 6d of a first radio access network, with areas of coverage 8a, 8b, 8c, and 8d. The areas of coverage may be referred to as WiFi hotspots, and the fixed wireless nodes 6a, 6b, 6c, and 6d may be wireless access points operating according to IEEE 802.11. The areas of coverage of the first radio access network are typically within the area of coverage 10 of a second radio access network, such as a cellular radio access network such as GERAN/UTRAN or E-UTRAN, operating according to GERA/UTRA or E-UTRA radio access technology.

The second radio access network has a cellular fixed wireless node 12, such as a cellular base station. The cellular fixed wireless node 12 is connected, via a telecommunications network 14, to a server system, i.e., an MIH information server 16, having a stored database 18 of fixed wireless nodes that are geographically dispersed.

The server system controls handovers of UEs between different radio access networks, such as an MIH server or an MIH information server 16. The stored database 18 may include data relating to fixed wireless nodes of the first radio access network, the second radio access network, and other radio access networks. It is noted that the description of wireless nodes as being "fixed" does not imply that the nodes may never move, as may be the case with a wireless base station, but may also include a movable wireless access point, such as a WiFi access point, that is temporarily situated in a location during use.

Due to the ad-hoc nature of many wireless networks, and in particular WiFi networks, there may be little or no central control or monitoring of the network. It may therefore be important to gather data for inclusion in the stored database of fixed wireless nodes by a process including a survey, that is to say to monitor broadcast signals received using a radio access technology appropriate to the radio access network of interest, and typically to derive identification data from the signals, and to derive signal strength information, such as received signal strength, from the broadcast signals. It is possible to update information in the data base by a process of drive testing, in which a vehicle suitably equipped with radio receivers is driven around an area of interest to gather data. However, this is often an expensive process, and requires regular repetition in order to maintain an up-to-date database.

In accordance with an embodiment of the present invention, a UE is used to update the database, exploiting the tendency of users to move throughout an area of interest as they go about their business and leisure activities.

Referring again to FIG. 1, a UE 2 moves on a path via geographical locations L1.1, L1.2, and L1.3.

The UE 2 has a radio transceiver for connecting to, or at least receiving signals from, a WiFi hotspot, i.e., the UE 2 communicates using IEEE 802.11 radio access technology, referred to herein as a first radio access technology.

In addition, the UE 2 also typically has a radio transceiver for communicating using a second radio access technology, e.g., a cellular wireless technology such as GERA/UTRA or E-UTRA. The UE has access to the stored database 18 of fixed wireless nodes via the second radio access network. However, in alternative embodiments, the access to the stored database 18 may alternatively or additionally be via the first radio access network.

The UE 2 determines a geographical location, e.g., using a navigation system, such as a Global positioning System (GPS), another satellite navigation system, or a navigation system including terrestrial transmitters. The UE 2, includes an MIH client 4, which is a service component used for controlling handover of UE 2 between different radio access networks.

Three of the fixed wireless nodes 6a, 6b, and 6c are represented in the database of fixed wireless nodes 18, and these nodes are depicted in FIG. 1 with unbroken lines. A fourth fixed wireless access node 6d, which is depicted in FIG. 1 with broken lines, is a new fixed wireless node that does not match an entry in the database of fixed wireless nodes 18.

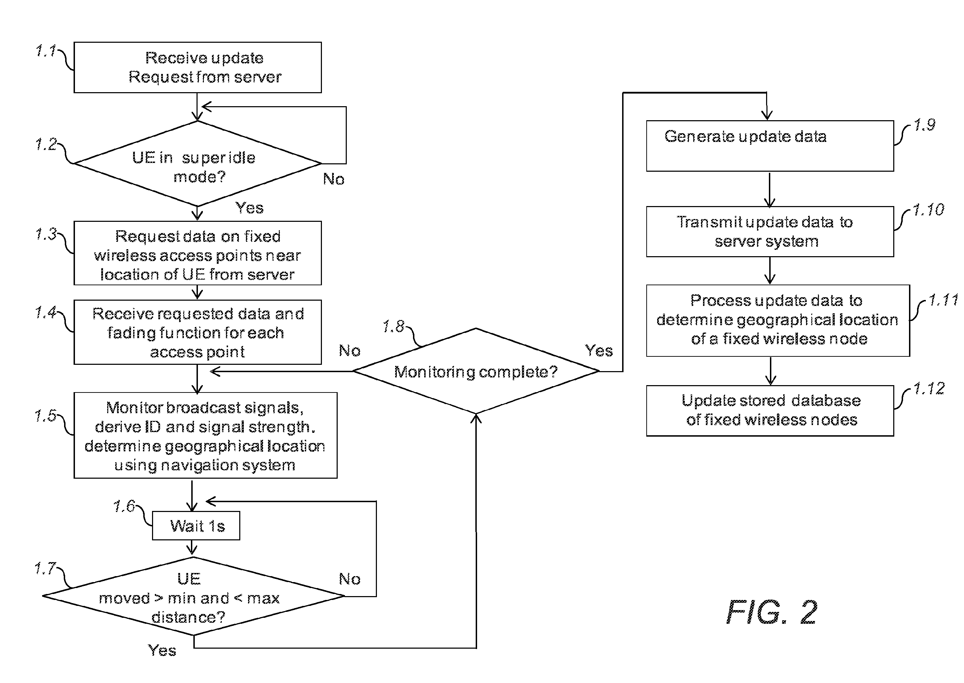

FIG. 2 is a flow chart illustrating a method for updating a database according to an embodiment of the invention.

Referring to FIG. 2, in step 1.1, the UE 2 receives an update request from a server system 16, i.e., MIH information server 18. In accordance with an embodiment of the present invention, the update request is a message requesting that the UE monitor broadcast signals received using the first radio access technology. The update request may be a subscription for a new event "Get Information indication" with the MIH client at the UE. When the MIH server has the required information from the MIH client, it can unsubscribe for the event with the mobile node. The UE may also monitor broadcast signals received using the second radio access technology and/or further radio access technologies in response to the receipt of the update request, because the stored database 18 may include data relating to fixed wireless nodes of the first radio access network, the second radio access network, and other radio access networks.

Typically, the server system 16 sends the update request, having identified that information is required from the UE to update the stored database 18. For example, the server system 16 may have identified that the part of the stored database 18 that covers the current location of the UE 2 is due to be updated.

In step 1.2, it is determined whether or not the UE 2 is in "super idle mode". The term "super idle mode" refers to a scenario wherein utilization of communication resources is below a threshold, so, for example, the UE 2 may have no or limited calls in progress or data transfer in progress (which may be termed "idle mode"), and also indicates some other condition of the UE 2 relating to the availability of resources at the UE 2 (hence "super idle mode"). For example, utilization of a processor in the UE 2 is below a threshold (for example, when CPU usage less than 30%), so that the UE 2 is not being used for a processor-intensive application such as a game. Alternatively, or in addition, it may be determined that a condition relating to battery charge is above a threshold (for example, greater than 80% of full battery charge).

The presence of headphones may be detected at the UE 2 and the detection may be used as an indication that the user has a call in progress, or that the user is using resources of the UE 2, such as processor resources, for example to play music or a game. The absence of the headphones may be used alone, or preferably in combination with another determination of a condition of the UE 2 relating to the availability of resources at the UE 2, to determine that the UE 2 is in super idle mode.

A determination that the use of a grip sensor is below a threshold, preferably in combination with other indicators, may also be used to determine that the UE 2 is in super idle mode. For example, the use of a grip sensor may indicate that a user is using a function of the UE that is processor-intensive.

In alternative embodiments, in step 1.2, it may be simply determined that the UE 2 is in idle mode rather than super idle mode, or the determination may be simply of the utilization of the processor or of an alternative condition of the UE 2 relating to an availability of resources.

In step 1.2, the UE may delay proceeding to subsequent steps until a condition of the UE relating to the availability of resources changes.

In step 1.3, the UE 2 requests, from the server system 16, data relating to wireless nodes near to the location of the UE 2. This request may include sending, to the server system 16, the location of the UE 2, or alternatively the server system 16 may already have information relating to the location of the UE 2.

In step 1.4, the UE 2 receives the requested data from the server system 16. The requested data may be derived from at least part of the stored database of fixed wireless nodes 18.

In step 1.5, broadcast signals are monitored by the UE 2 to derive identification data and signal strength data of fixed wireless nodes. In accordance with an embodiment of the present invention, a geographical position of the UE 2 at which broadcast signals were received is determined using a navigation system, as described above.

Step 1.5 may be termed a monitoring event, and following this a delay may be imposed in step 1.6, e.g., approximately one second. Values of delay in the range 100 ms to 10 seconds may be particularly suitable.

Following the delay, in step 1.7, it is determined, by use of the navigation system, whether the UE 2 has moved by more than a minimum distance, and whether the UE 2 has moved less than a maximum distance. If the UE 2 has not moved by more than the minimum distance, then the process returns to step 1.6 and the position is again determined in step 1.7, after a delay. For example, for a delay of approximately 1s, a minimum distance may be typically 1 m, and a maximum distance typically 10m. If the movement is less than the minimum distance, then it may not be an economical use of resources to carry out a measurement, because the information would duplicate that of the previous measurement to a large extent. If the distance moved is greater than the maximum distance, then the UE may be moving too fast to obtain a reliable measurement.

If the user has moved more than the maximum distance and less than the minimum distance, it is determined if monitoring is complete in step 1.8. If monitoring is not complete, then the process returns to step 1.5 at which a further monitoring event is carried out.

Alternatively, an indication of speed may be obtained by other conventional means such as an output from a GPS receiver, and triggering of a monitoring event may be dependent on the indication of speed being between upper and lower bounds, for example, between 1 m/s and 10 m/s. Triggering of a measurement event may be based on a distance moved.

However, if the first monitoring event did not reveal any significant discrepancies between the data downloaded from the server system and the data derived from the monitoring event, an additional delay may be imposed before further monitoring. For example, the additional delay may be 5 minutes.

It may be determined whether or not any significant discrepancies were revealed in the first monitoring event by the following process. The data downloaded from the server system 16 may include at least part of the stored database of fixed wireless nodes 18 held at the server system 16, so that the UE 2 has a replica database including the downloaded data. The UE 2 compares derived update data with the replica database and to determine new fixed wireless nodes from the comparison, if any, for which derived update data does not match an entry in the replica database and to determine from the comparison missing wireless nodes, if any, for which an entry in the replica database does not match derived identification data. Accordingly, it can be determined if new fixed wireless nodes have been added to the network because a previous update of the database, or if previously active nodes have become inactive or been removed or inaccessible. If it is determined that a wireless node or nodes have been added or been removed or become inactive or inaccessible, then this may be deemed a significant discrepancy.

If it is determined, in step 1.8, that the monitoring is complete, then update data is generated in step 1.9. The monitoring may be determined to be complete, for example, based on the amount of data requested in the update request from the server in step 1.1.

In accordance with an embodiment of the present invention, the generation of update data in step 1.9, involves generating unprocessed or "raw" data, i.e., data that has not been processed, to determine a position of a wireless node. The update data includes identification data, signal strength data, and geographical location data relating to one or more geographical locations of the UE 2 at which broadcast signals were received. The upload of raw update data minimizes the requirements on the processing resources at the UE 2.

In step 1.10, the UE 2 transmits the update data to the server system 16.

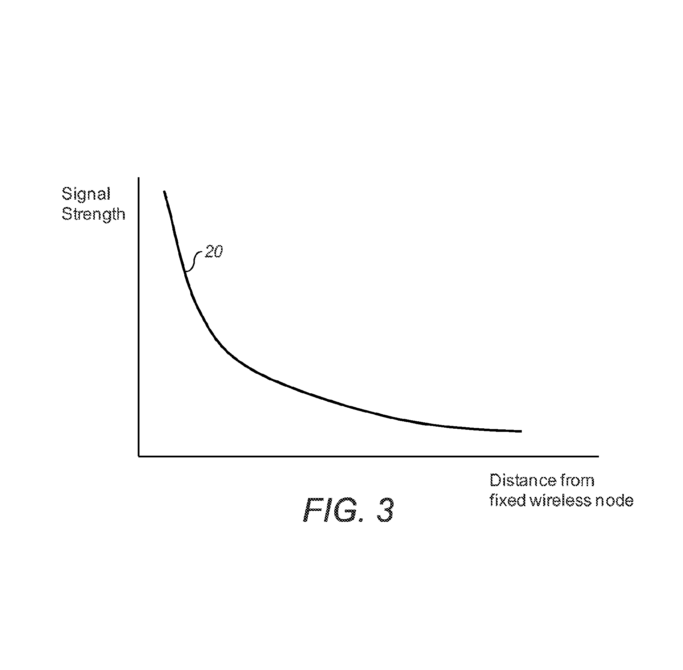

In step 1.11, the update data is processed at the server system 16, to determine a geographical location of a fixed wireless node, such as a fixed wireless node is a node that has been added to the network, so that its position is not known. The position may be determined using a relationship between received signal strength and distance from a fixed wireless node, i.e., based on a fading function. A typical relationship between signal strength and distance from a fixed wireless node is illustrated by the curve 20 in FIG. 3. The fading function may be a previously measured relationship for a wireless node of a given type using a given radio access technology, or a theoretical relationship.

Knowledge of the received signal power at a series of known geographical locations and the fading function may be used to solve for the unknown position of the fixed wireless node. The greater the number of measurements, the greater the accuracy with which the position of the fixed wireless node can be determined. If sufficient measurements are available, then the unknown position of the fixed wireless node may be estimated without prior knowledge of the fading function.

In step 1.12, the stored database of wireless nodes 18 is updated using the update data and the processed update data. For example, the geographical position of a fixed wireless node that has been added to the first radio access network may be included in the update.

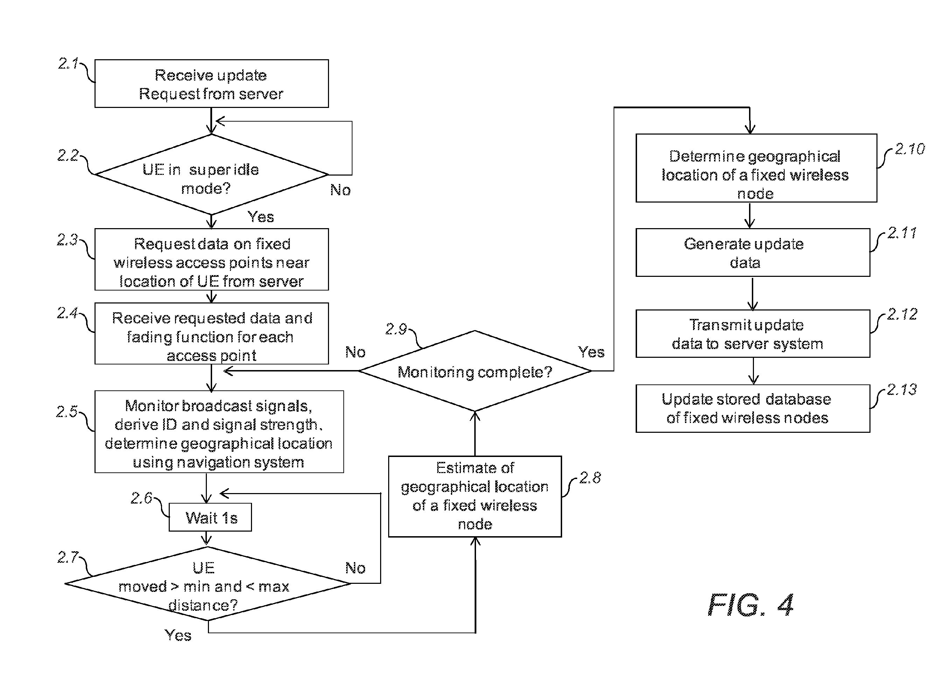

FIG. 4 is a flow a flow chart illustrating a method for updating a database according to an embodiment of the invention.

The embodiment illustrated in FIG. 4 differs from the embodiment illustrated in FIG. 2 in that the processing to determine the geographical position of a fixed wireless node is carried out at the UE 2, rather than at the server system 16. In order to assist the determination, a fading function may be downloaded to the UE 2. However, as previously noted, if sufficient measurements are available, then the unknown position of the fixed wireless node may be estimated without prior knowledge of the fading function. By processing at the UE 2, the processing load on the server system 16 may be reduced, and the amount of data uploaded from the UE 2 to the server system 16 may also be reduced.

In FIG. 4, steps 2.1 to 2.3 are similar to steps 1.1 to 1.3 of FIG. 2. Accordingly, a repetitive description of these steps is omitted.

In step 2.4, a fading function may be downloaded to the UE 2 from the server 16. Alternatively, a fading function stored in the UE 2 may be used.

Steps 2.5 to 2.7 in FIG. 4 are similar to steps 1.5 to 1.7 in FIG. 2. Accordingly, a repetitive description of these steps is omitted.

In step 2.8, a geographical location of a fixed wireless node is determined by the UE 2, by similar processing to that described in relation to step 1.11. This determination may take the form of an estimate of geographical location that is iteratively refined with successive measurement events. Alternatively, step 2.8 may be omitted, and the geographical location may be determined in step 2.10, upon completion of monitoring in step 2.9.

In step 2.10, a geographical location of a fixed wireless node is determined at the UE 2. For example, this determination may be based on the estimate derived in step 2.8, or by similar processing described in relation to step 1.11.

In step 2.11, update data is generated, including the location of a fixed wireless node, and in step 2.12, the update data is transmitted to the server system 16.

In step 2.13, the stored database of wireless nodes 18 is updated using the update data and the processed update data.

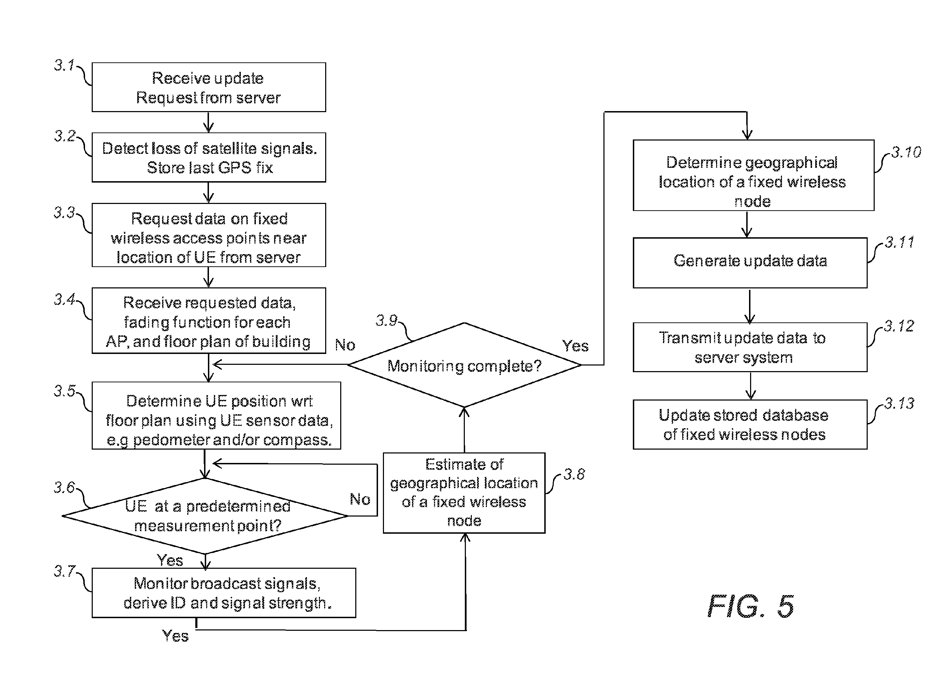

FIG. 5 is a flow a flow chart illustrating a method for updating a database according to an embodiment of the invention.

The embodiment illustrated in FIG. 5 relates to indoor navigation, where a navigation system such as a satellite navigation system may not function due to the unavailability of received signals. Therefore, the position of the UE 2 is determined at the monitoring locations, and the UE 2 should monitor broadcast signals, when the navigation system is unavailable.

Specifically, the embodiment illustrated in FIG. 3 relates to where a plan of a building in which the UE 2 is located is downloaded from the server system 16. The position of the UE 2 may be determined with respect to the plan by use of measurements of the motion of the UE 2, e.g., using sensors in the UE 2, such as an accelerometer, compass, altimeter and/or pedometer, with reference to a known starting point determined using the navigation system. The information in the plan may include positions of internal and external walls, locations of fixed wireless nodes (including which floor of the building on which they are located) and locations of preferred monitoring locations. The position of the UE 2 may also be determined using signal strength and/or fading functions of the known fixed wireless nodes.

The location of any new fixed wireless nodes such as access points may then be determined by monitoring broadcast signals and based on the locations of the UE 2 at which monitoring took place. The locations of new access points may be expressed in relation to the plan, for example, by including a designation of a floor on which they are located. The locations of the new fixed wireless nodes may then be uploaded to the server system 16 for use in updating the database of fixed wireless nodes 18.

The plan may also be used to determine the location of the UE 2 for purposes unconnected with the updating a database of fixed wireless nodes 18.

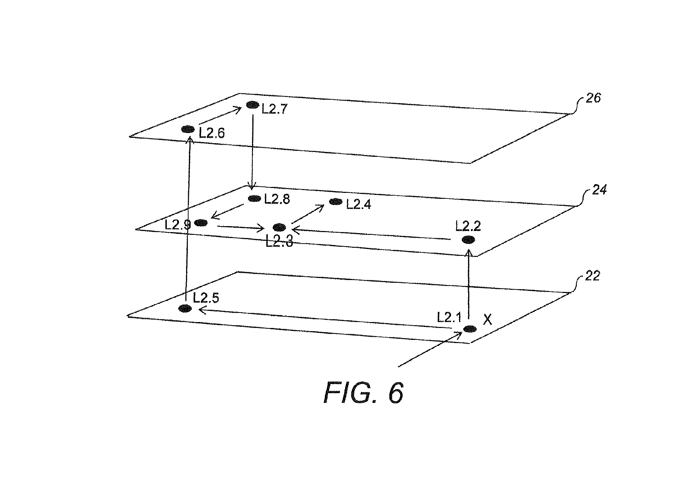

Referring to FIG. 5, in step 3.1, similar to step 1.1, the UE 2 receives an update request from the server system. In step 3.2, the UE 2 detects a loss of satellite signals, or terrestrial navigation signals, and stores the last position determined by the navigation system. Typically, the loss of satellite signals may be declared if signals are available from less than three satellites. Referring to FIG. 6, the loss of satellite signal may occur at location L2.1, which is the location of the entrance of the building.

In step 3.3, the UE 2 requests data on fixed wireless nodes, which may be wireless access points, near the location of the UE 2. The UE 2 may also indicate to the server system 16 that it has moved indoors, based on the loss of satellite signals. Communication to the server system 16 may be via the second radio access network, which may be more robust to indoor operation than the navigation system.

In step 3.4, the UE receives the requested data including parts of the stored database of wireless nodes 18, and in addition the UE 2 may receive a fading function. The fading function may be a generic function appropriate to the radio access technology of the signals that are monitored, or may be a function, such as a measured function, for each wireless node.

In addition, a plan of a building is downloaded from the server 16 in step 3.4. The plan may show the positions of known wireless access nodes 6a, 6b, and 6c, and may also show internal and external walls. The plan may be referred to as a floor plan. The coordinates used in the plan may be GPS coordinates, and these coordinates may be used in addition to the designation of a floor, such as "first floor", "second floor", etc. The plan may also show predetermined monitoring locations, which are locations at which monitoring of broadcast signals may be triggered. The monitoring locations may be chosen to be sufficiently far apart to ensure that measurements are not taken unnecessarily, and may be conveniently located at turning points on the floor plan, such as corners of corridors.

In step 3.5, the location of the UE 2 is determined with respect to the plan by the use of data derived from sensors in the UE 2. As described above, the sensors may be, for example, a pedometer, a compass, accelerometer and/or an altimeter, and data derived from the sensors may be used to derive relative navigation data, such as data relating to a position relative to the last position determined by the navigation system; this may be the last GPS fix.

The determination of location of the UE 2 position in step 3.5 may alternatively or additionally be performed based on the monitoring of the broadcast signals from wireless access nodes. Knowledge of the received signal strength and the fading function for the signal from fixed wireless nodes, together with the transmit power of the fixed wireless nodes, allows the location of the UE 2 to be estimated.

The estimate of the location may be further refined by use of the plan. For example, a determination of location of the UE 2 based on measurements from two fixed wireless nodes may be ambiguous, i.e., there may be two or more possible solutions. Reference to the plan may indicate that one location is more likely to be correct than another, as, for example, one of the candidate locations may be outside the building. Furthermore, it may be that the determined location is on a designated part of the plan, and if it is not then the position estimate may be corrected accordingly.

Estimates of the location of the UE 2 derived from the monitoring of signals received from fixed wireless nodes may be combined with estimates of the location derived from the sensors in the UE 2.

Referring again to FIG. 5, in step 3.6, it is determined whether or not the UE 2 is at a predetermined measurement point. If it is, broadcast signals are monitored in step 3.7 to derive identification and signal strength data. The monitoring may be dependent on at least one condition of the UE 2 relating to the availability of resources at the UE 2, as in FIG. 2.

In step 3.8, the geographical position of a fixed wireless node is determined, typically a node that has been added to the network and does not feature in the data downloaded from the server system 16 in step 3.4, such as wireless node 6d. The determination may be an estimate that is iteratively refined using successive monitoring events. The determination may be on the basis of measurements of broadcast signals taken at a number of locations of the UEs, typically using a fading function. The locations of the UE 2 at which the measurements are taken may have been determined by the process of step 3.5. Alternatively, step 3.8 may be omitted, and the geographical location may be determined in step 3.10, upon completion of the monitoring in step 3.9.

If it is determined at step 3.9 that the monitoring process is not complete, similarly to step 1.8, then determination of the UE 2 position in step 3.5 is repeated.

If the monitoring process is complete in step 3.9, then the geographical position of the fixed wireless node is determined in step 3.10. The determination may be based on the estimate derived in step 3.8, if the iterative approach has been taken. Similarly to step 3.8, the determination may be based on measurements of broadcast signals taken at a number of locations of the UE 2, e.g., using a fading function. The locations of the UE 2 at which the measurements are taken may be determined in step 3.5.

In step 3.11, update data is generated that includes the geographical location of a fixed wireless node, and in step 3.12, the update data is transmitted to the server system.

In step 3.13, the stored database of wireless nodes is updated using the update data.

Alternatively, the geographical location of a fixed wireless node may be calculated at the server system 16, similarly to FIG. 2, rather than at the UE 2. In this case the update data may include location data related to the locations at which monitoring of broadcast signals was performed.

In accordance with an embodiment of the present invention, a method of identifying a position of the UE 2 may be used for indoor navigation, independently of a process for the update of a stored database of fixed wireless nodes. Indoor navigation may, furthermore, be enhanced by the following techniques.

For example, the floor on which the UE 2 is located may be determined by monitoring broadcast signals from fixed wireless nodes such as access points, together with the known floor designation for the nodes, which may be obtained from the downloaded plan. For example, a fading function may be assumed to show less attenuation within a floor than for the same distance vertically between floors.

Alternatively or additionally, a pattern of movement may be used to recognise a floor based on an expectation based on past movements of UE 2 according to the floor. For example, a template of likely movement may be maintained for each floor. The template may, for example, be included as part of the plan.

The determination that the UE 2 has followed a path that includes a location associated with changing floors, such as stairs or an elevator or lift, may be taken as an indication that a change of floors is likely, and may be used in combination with another indicator to determine the floor on which the UE 2 is located.

Communication with other UEs, such as by peer-to-peer communication, may be used to access information relating to the floor where the UE is located. For example, the other UEs may have sensors, such as altimeters. It may be determined that the other UEs are on the same floor as the UE 2 whose location is to be determined, based on received signal strength of signals from the other UEs or based on a short range communication channel is functioning.

An access point in the building may broadcast data indicating on which floor it is located, and the UE 2 may then determine the floor on which the UE 2 is located based on the signal strength received from the access point.

The accuracy of relative positioning within a floor of a building may be improved by the use of reference points of known location. For example, a compass and accelerometer and/or pedometer may be used for relative navigation to identify a relative location of the UE 2 with respect to a known initial reference point, such as the position of the last GPS fix. The UE 2 may then move into the vicinity of a second recognisable reference point; if the identity of the second reference point is verified to an acceptable degree of certainty, it may then be used as the basis of further relative navigation. By this process, the accumulation of errors in the relative navigation process is minimized. Suitable reference points include a building entrance (that may correspond to the position of the last GPS fix), and a location associated with a change of floor, such as stairs or a lift/elevator (that may be verified by an associated change in altitude or a verified subsequent floor change).

In addition, characteristics of signals received from one or more fixed wireless nodes, such as access points, may be used to identify a reference point, .e.g., a change in signal strength may be recognised. For example, a change in signal strength may be associated with a particular location due to an obstruction of the signal.

It may be useful to determine whether a UE 2 is moving or stationary, and to estimate the speed of any motion. This information may be useful, for example, in determining whether or not monitoring broadcast signals from fixed wireless nodes should be enabled for the purposes of updating a database of fixed wireless nodes, or for aiding the accuracy of relative navigation.

In order to identify whether or not the UE 2 is stationary and to potentially estimate the speed of any motion, one or more of the following techniques may be employed.

A camera on the UE 2 may be used to view the surroundings, and changes in the image formed by the camera may be detected.

A change in audio noise level may be detected using a microphone at the UE 2.

A change in signal level received from one or more fixed wireless nodes may be detected.

Activity at the UE 2 associated with movement of the UE 2 may be identified, such as the display being on or off. It may be more likely that a display is on when the UE 2 is stationary.

Output from a movement sensor in the UE 2, such as a pedometer or accelerometer, may be used to detect movement, and a change in the output from a compass or altimeter may also indicate movement.

Combinations of indicators of movement may be used to increase confidence in the indication; for example, an indication of acceleration from an accelerometer in combination with the display being off may be a good indicator that the UE 2 is moving.

In order to identify whether or not movement of the UE 2 corresponds with a change of floors, a short stationary period (that may be in a lift) may be an indicating factor, that may be in combination a location of the UE 2 corresponding with the stairs of lift. A change in one of the factors indicating a floor would be a further indicating factor that a movement involved a change of floors.

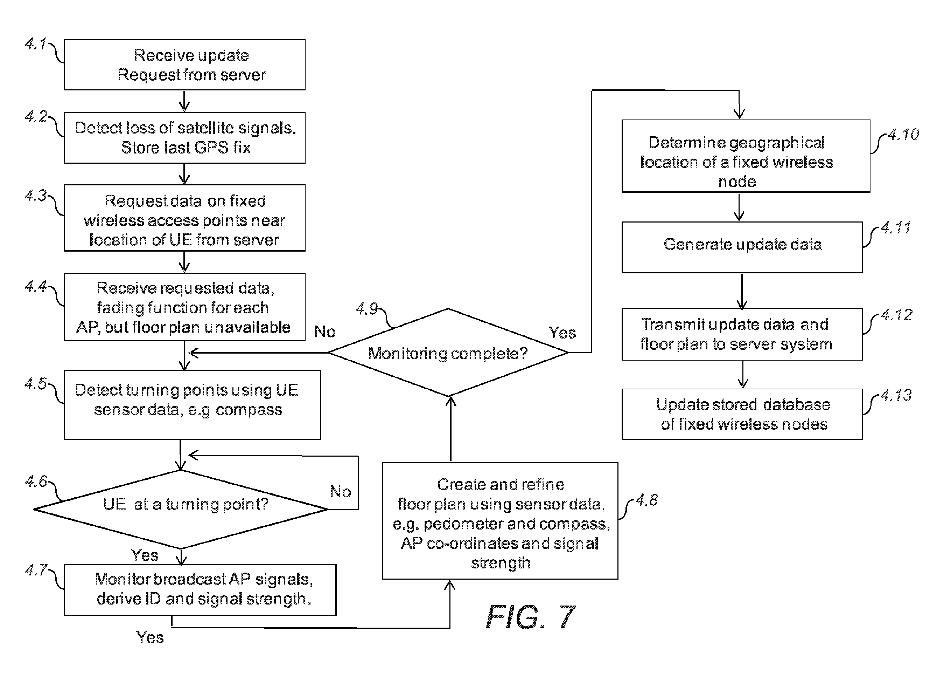

FIG. 7 is a flow a flow chart illustrating a method for updating a database according to an embodiment of the invention.

The embodiment illustrated in FIG. 7, in common with the embodiment illustrated in FIG. 5, relates in particular to indoor navigation, but the embodiment in FIG. 7 also relates to a scenario in which a plan of the building is unavailable from the server system 16. In this case, the UE 2 is arranged to compile a plan, on the basis of a history of movement of the UE 2. For example, the movement history of the UE 2 may be recorded over a period of several days. When the plan is compiled, it may be uploaded to the server system 16. The compiled plan may be used for determining a location of the UE 2 in a similar manner to the downloaded floor plan as illustrated in FIG. 5.

Alternatively, the plan may be compiled at the server system 16, based on the data uploaded to the server system 16 from one or more UEs. For example, a history of movement within the building may be uploaded from each of several UEs, or from one UE on several occasions, and a composite plan of the building may be compiled at the server system 16. Over time, the plan may be refined by successive updates.

Referring to FIG. 7, steps 4.1 to 4.3 are similar to steps 3.1 to 3.3 described in relation to FIG. 5. Accordingly, a repetitive description of these steps is omitted.

In step 4.4, requested data is downloaded relating to fixed wireless nodes, but a plan is unavailable. The UE 2 starts a process of compiling a plan in dependence on the determination that a plan is unavailable. Alternatively, the UE 2 may start compiling a plan dependent on a request from the server system 16.

In step 4.5, a process is carried out to detect a turning point. A turning point is a location at which the direction of travel of the UE 2 changes by more than a predetermined amount, for example, the predetermined amount may be 20 degrees, but values in the range 10 degrees to 80 degrees may be particularly beneficial. The change in direction may be detected by use of a compass. Turning points of a building may be easily and repeatedly determined, and as a result they are particularly suitable for use as locations for monitoring of broadcast signals from fixed wireless access points repeatedly for a number of trips.

In step 4.7, broadcast signals from fixed wireless nodes are monitored and identification data and signal strength data is derived. The monitoring may be dependent on at least one condition of the UE 2 relating to the availability of resources at the UE 2.

In step 4.8, a plan is created and refined in successive iterations. The process of creating and refining the plan may be illustrated by reference to FIG. 6. In this first example, the plan in question is a map showing identified turning points, which may be preferred monitoring locations, within a building.

A user of the UE 2 may work in the building represented by FIG. 6, where three floors are shown. The user enters the building on the ground floor 22 at location L2.1, which is the location of the last GPS fix. On the first day, the user ascends in the lift to the first floor 24, and turns on leaving the lift at location L2.2, which is determined to be a turning point based on measurements from the compass, triggering monitoring of broadcast signals. The location of L2.2 can then be determined on a basis that may include the monitoring of broadcast signals, and preferably also on the basis of data derived from the altimeter and/or an accelerometer.

The accelerometer may be used as a pedometer, identifying a distance travelled in terms of number of steps taken. The compass is used to identify the orientation of movement.

The user then moves to position L2.3. At L2.3, the user turns, triggering another monitoring event from which the location can be determined. The user then moves to location L2.4, which is the normal working location for the user, so that in practice multiple monitoring events may be triggered during the day, from which the location of L2.4 can be determined. Position L2.4 may be treated as a reference point, in that it may be assumed that if the user spends an extended period in the vicinity of L2.4, it is probable that the user is actually at the normal working location, so the position may be reset to a location of L2.4 which has been determined with more accuracy than the current position over previous iterations. In this way, accumulated errors in the relative navigation system are reduced. Identification of other reference points, such as stairs or a lift, in a manner similar to that described in connection with FIG. 5 may also be used to reduce the effect of accumulated errors in determination of location.

Also, the accuracy of the determination of the location of L2.4 may be enhanced over several iterations by combining the results of several determinations.

FIG. 6 also illustrates a path taken by the user on a second trip, in this case the user enters the building at L2.1, but this time moves to L2.5, turning, triggering a monitoring event, and then ascending in a lift to the second floor 26. Monitoring events are then triggered as the user turns at locations L2.6 and L2.7, descends to L2.8, turns and moves to L2.9, and turns, and turns again at L2.3, to get to the normal place of work at L2.4.

The distance between turning points may be calculated using a pedometer and/or an assumption of average speed and a timed interval. The measurements from the pedometer and/or the compass may be combined with those derived from the access points to refine the location estimation.

It can be seen that over a number of different trips, measurements may be carried out at various parts of the building and that many of the paths followed will be repeated day-to-day, allowing an average position to be calculated for turning points, or other reference points, which may have enhanced accuracy.

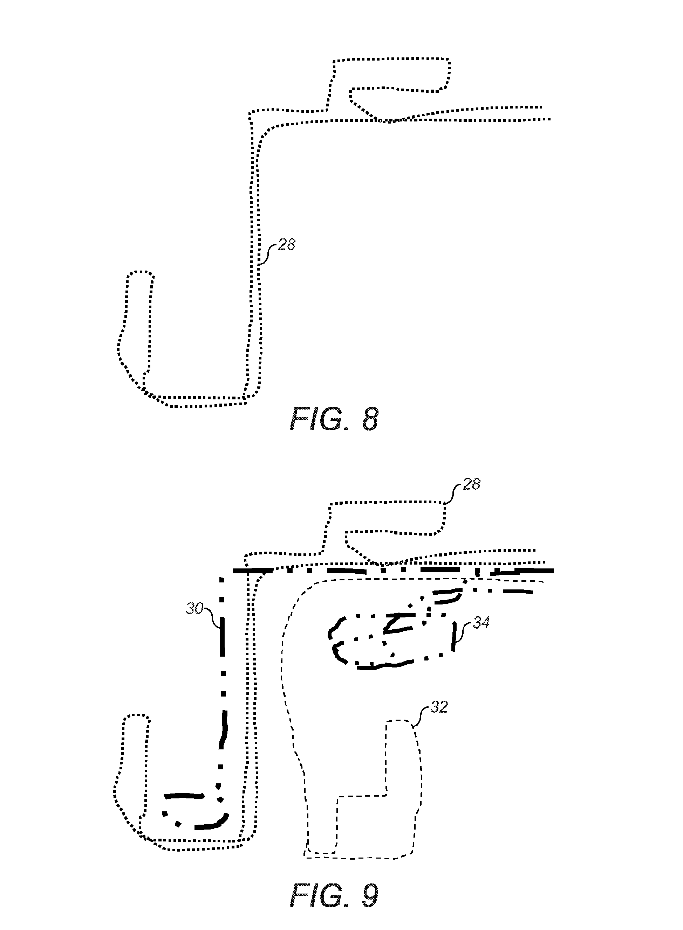

FIG. 8 is a schematic diagram illustrating a recorded path of a UE within a building according to an embodiment of the present invention.

Referring to FIG. 8, a path 28 is determined by a UE 2 within a building, for example, using a pedometer and compass. The data describing the path 28 may be used at the UE 2 to compile a plan, or may be uploaded to the server system 16 so that the server system 16 may compile a plan.

FIG. 9 is a schematic diagram illustrating four recorded paths within a building according to an embodiment of the present invention.

Referring to FIG. 9, four paths 28, 30, 32, and 34 are taken within the building. The paths may be successive trips taken by the same UE 2, or may be paths taken by several UEs.

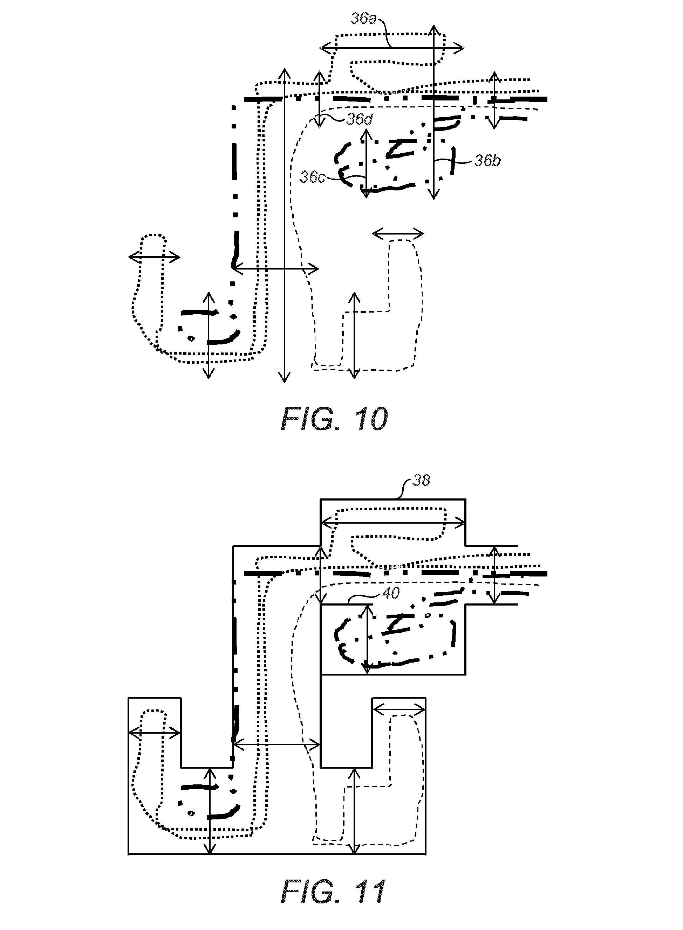

FIG. 10 is a schematic diagram illustrating estimation of extreme points of movement within a building according to an embodiment of the present invention. Specifically, FIG. 10 illustrates how a plan may be compiled using the data describing the paths as illustrated in FIG. 9.

Referring to FIG. 10, an overlay of the paths makes use of at least a known reference point at the start of each path, which may be an entry point to the building or the point of the last GPS fix. The maximum extreme points of consecutive movement across a floor are determined, in order to build up an estimate of wall positions. Ranges of movement are identified by, for example, ranges 36a, 36b, 36c, and 36d. Further, locations of UE 2 have been detected throughout the range 36b, but there is a gap between the ranges 36c and 36d, which none of the paths have crossed. It may be estimated, therefore, that there is a wall or some other obstruction between the ranges 36c and 36d.

FIG. 11 is a schematic diagram illustrating estimation of positions of internal and external walls of a building according to an embodiment of the present invention. Specifically, FIG. 11 illustrates estimated positions of internal and external walls of a building, based on the paths illustrated in FIG. 9 and the determination of extreme points of consecutive movement across a floor of FIG. 10.

It should be noted that the process of compiling a plan of a building does not necessarily involve monitoring broadcast signals from fixed wireless nodes, and may be carried out for purposes other than for determining the position of a fixed wireless node; for example, the plan may be generated to aid navigation within a building.

Returning to FIG. 7, in step 4.9 it is decided whether the monitoring is complete, similarly to step 1.8.

Steps 4.10 to 4.13 proceed in a similar manner to steps 3.10 to 3.13, which have been described with reference to FIG. 5, except that the compiled plan, which may be a floor plan, may be uploaded to the server system 16, at step 4.12. Accordingly, a repetitive description of these steps is omitted.

It will be appreciated that certain aspects and embodiments of the present invention provide User Equipment and a server system in accordance with the following numbered paragraphs.
Paragaph 1. A User Equipment (UE) for use in a wireless network including a first radio access network supporting a first radio access technology and a server system including a stored database of wireless nodes, the stored database identifying fixed wireless nodes that are geographically dispersed and that broadcast a signal including identification data, the UE comprising:
   a transceiver for communicating using the first radio access technology;
   a position determination unit for determining a geographical location; and
   a controller for accessing data derived from the stored database,
   monitoring broadcast signals received using the first radio access technology, upon receipt of an update request from the server system, deriving identification data and signal strength data of the fixed wireless nodes from the received broadcast signals, generating update data from the identification data, signal strength data, and geographical location data relating to the UE, and transmitting the update data to the server system in order to update the stored database of the fixed wireless nodes.
Paragraph 2. The UE according to paragraph 1, wherein the update data includes the signal strength data, identification data corresponding to the received broadcast signals, and the geographical location data relating to a geographical location of the UE. at which the broadcast signals were received.
Paragraph 3. The UE according to paragraph 1, wherein the UE the position determination unit includes a first navigation system to determine the geographical location.
Paragraph 4. The UE according to paragraph 3, wherein the first navigation system comprises a satellite navigation system.
Paragraph 5. The UE according to paragraph 2, wherein the controller processes the signal strength data and the identification data corresponding to the received broadcast signals, and processes data relating to a relationship between signal strength and distance to determine the geographical location of the UE.
Paragraph 6. The UE according to paragraph 2, wherein the controller processes the identification data, the signal strength data, and data relating to a relationship between signal strength and distance to determine a geographical location of a fixed wireless node, and
   wherein the update data includes the determined geographical location of the fixed wireless access node.
Paragraph 7. The UE according to paragraph 6, wherein the transceiver receives the data relating to a relationship between signal strength and distance from the server system.
Paragraph 8. The UE according to paragraph 1, wherein the UE further comprises a replica database derived from at least part of the stored database of the fixed wireless nodes, and
   wherein the update data is derived at least in part by processing in relation to the replica database.
Paragraph 9. The UE according to paragraph 8, wherein the controller compares the derived identification data with identification data of the replica database, determines from new fixed wireless nodes, if any, for which the derived identification data does not match an entry in the replica database, based on the comparison, and determines missing wireless nodes, if any, for which an entry in the replica database does not match the derived identification data, based on the comparison.
Paragraph 10. The UE according to paragraph 1, wherein the controller monitors the signals depending on at least one predetermined condition of the UE relating to availability of resources at the UE.
Paragraph 11. The UE according to paragraph 10, wherein the at least one predetermined condition includes a condition relating to utilization of communication resources being below a threshold.
Paragraph 12. The UE according to paragraph 10, wherein the at least one predetermined condition includes a condition relating to utilization of a processor in the UE being below a threshold.
Paragraph 13. The UE according to paragraph 10, wherein the controller monitors the signals depending on the at least one predetermined condition, when an absence of headphones at the UE is detected.
Paragraph 14. The UE according to paragraph 10, wherein the controller monitors the signals depending on the at least one predetermined condition, when usage of a grip sensor is below a threshold.
Paragraph 15. The UE according to paragraph 10, wherein the at least one predetermined condition includes a condition relating to a battery charge level being above a threshold.
Paragraph 16. The UE according to paragraph 1, wherein the controller intermittently monitors the signals, with a predetermined time interval between monitoring events.
Paragraph 17. The UE according to paragraph 1, wherein the controller monitors the signals depending on at least a determination that a location of the UE has changed by more than a predetermined minimum distance from a location at which signals have been previously monitored by the UE.
Paragraph 18. The UE according to paragraph 1, wherein the controller monitors signals depending on at least a determination that a location of the UE has changed by less than a predetermined maximum distance from a location at which signals have been previously monitored by the UE.
Paragraph 19. The UE according to paragraph 1, wherein the controller comprises a service component for controlling a handover of the UE between different radio access networks, and
   wherein the service component monitors the broadcast signals, derives the identification data, and generates the update data.
Paragraph 20. The UE according to paragraph 19, wherein the service component includes a Media Independent Handover (MIH) client.
Paragraph 21. The UE according paragraph 1, wherein the wireless network includes a second radio access network operating according to a second radio access technology,
   wherein the UE communicates using the second radio access technology, and
   wherein the UE transmits the update data using the second radio access technology.
Paragraph 22. The UE according to paragraph 21, wherein the first radio access technology includes an IEEE 802.11 technology and the second radio access technology includes a cellular wireless technology.
Paragraph 23. A User Equipment (UE) for use in a wireless network including a first radio access network supporting a first radio access technology and a server system including a stored database of wireless nodes, the stored database identifying fixed wireless nodes that are geographically dispersed and that broadcast a signal including identification data, the UE comprising:
   a transceiver for communicating using the first radio access technology;
   a position determination unit for determining a geographic location; and
   a controller for accessing data derived from the stored database, monitoring broadcast signals received using the first radio access technology, deriving identification data and signal strength data of the fixed wireless nodes from the received broadcast signals, generating update data from the identification data, signal strength data, and geographical location data relating to the UE, and transmitting the update data to the server system in order to update the stored database of the fixed wireless nodes,
   wherein the position determination unit determines the geographical location by processing the signal strength data, the identification data corresponding to the received broadcast signals, and data relating to a relationship between signal strength and distance.
Paragraph 24. The UE according to paragraph 23, wherein the position determination unit includes a relative navigation system for estimating, based on a sensor in the UE, a geographical location of the UE relative to a previously determined geographical location,
   the sensor including at least one of a compass, an accelerometer, a pedometer, and an altimeter.
Paragraph 25. The UE according to paragraph 23, wherein the UE downloads location data indicating preferred monitoring locations from the server system, and monitors the signals depending on a determination that a geographical location of the UE corresponds to one of said preferred monitoring locations.
Paragraph 26. The UE according to paragraph 25, wherein the controller compiles location data indicating preferred monitoring locations based on a motion history the UE, the preferred monitoring locations relating to geographical locations at which the direction of motion of the UE has changed direction by more than a predetermined amount.
Paragraph 27. The UE according to paragraph 26, wherein the compiled location data includes an identifier of a floor of a building.
Paragraph 28. The UE according to paragraph 26, wherein the compiled location data includes a plan of a building.
Paragraph 29. The UE according to paragraph 26, wherein the transceiver transmits the compiled location data to the server system.
Paragraph 30. A server system for use with a wireless network and a plurality of User Equipments (UEs), the wireless network including a first radio access network supporting a first radio access technology, the UEs communicating using the first radio access technology, determining geographical locations, and accessing data derived from the server system, the server system comprising:
   a stored database of wireless nodes, the stored database identifying fixed wireless nodes that are geographically dispersed and that broadcast a signal including identification data; and
   a controller for selecting a UE from which information is required to update the stored database, sending an update request to the selected UE requesting the selected UE to monitor broadcast signals received using the first radio access technology, and updating the stored database of the fixed wireless nodes using update data from the selected UE,
   wherein the selected UE derives identification data and signal strength data of the fixed wireless nodes from the received broadcast signals, generates the update data from the identification data, signal strength data, and geographical location data relating to the UE, and transmits the update data to the server system.
Paragraph 31. The server system according to paragraph 30, wherein the update data relates to signal strength data and identification data corresponding to the received broadcast signals and to geographical locations of the UE at which the broadcast signals were received, and
   wherein the controller processes the update data to determine a geographical location of a fixed wireless node based on a relationship between received signal power and distance from the fixed access node.
Paragraph 32. The server system according to paragraph 31, wherein the server system receives update data from a plurality ofUEs, and
   wherein the controller updates the database based on the update data from each of the plurality of UEs.
Paragraph 33. The server system according to paragraph 31, wherein the server system comprises a Media Independent Handover (MIH) server.
Paragraph 34. A User Equipment (UE) for use in a wireless network, the UE comprising:
   a position determination unit for determining a geographical locationusing a relative navigation system that estimates, by using a sensor the UE, a geographical location of the UE relative to a previously determined geographical location; and
   a controller for storing reference information relating to a plurality of different reference locations in a geographical area and estimating the geographical location of the UE based on a determination of the geographical location using the reference information.
Paragraph 35. The UE according to paragraph 34, wherein the sensor includes at least one of a compass, an accelerometer, a pedometer, and an altimeter.
Paragraph 36. The UE according to paragraph 34, wherein the UE downloads the reference information from a server system.
Paragraph 37. The UE according to paragraph 34, wherein the reference information includes a plan of a geographical area.
Paragraph 38. A User Equipment (UE) for use in a wireless network, the UE comprising:
   a position determination unit for determining a geographical location using a navigation system; and
   a controller for compiling reference information based on a history of locations of the UE.
Paragraph 39. The UE according to paragraph 38, wherein compiled reference information includes an identifier of a floor of a building.
Paragraph 40. The UE according to paragraph 38, wherein compiled reference information comprises an estimated plan of a geographical area.
Paragraph 41. The UE according to paragraph 38, wherein the UE estimates the geographical location of the UE based on a a determination of the geographical location in relation to compiled reference information.
Paragraph 42. The UE according to paragraph 38, wherein the UE transmits the compiled reference information to a server system.

While the present invention has been particularly shown and described with reference to certain embodiments thereof, it will be understood by those of ordinary skill in the art that various changes in form and details may be made therein without departing from the spirit and scope of the present invention as defined by the following claims and their equivalents.

## Claims

1. A User Equipment (UE) for use in a wireless network including a first radio access network supporting a first radio access technology and a server system including a stored database of wireless nodes, the stored database identifying fixed wireless nodes that are geographically dispersed and that broadcast a signal including identification data, the UE comprising:
a transceiver for communicating using the first radio access technology;
a position determination unit for determining a geographical location; and
a controller for accessing data derived from the stored database,
monitoring broadcast signals received using the first radio access technology, upon receipt of an update request from the server system, deriving identification data and signal strength data of the fixed wireless nodes from the received broadcast signals, generating update data from the identification data, signal strength data, and geographical location data relating to the UE, and transmitting the update data to the server system in order to update the stored database of the fixed wireless nodes.

2. The UE according to claim 1, wherein the update data includes the signal strength data, identification data corresponding to the received broadcast signals, and the geographical location data relating to a geographical location of the UE. at which the broadcast signals were received,
and optionally
wherein the controller processes the signal strength data and the identification data corresponding to the received broadcast signals, and processes data relating to a relationship between signal strength and distance to determine the geographical location of the UE.

3. The UE according to claim 1, wherein the UE the position determination unit includes a first navigation system to determine the geographical location,
and optionally
wherein the first navigation system comprises a satellite navigation system.

4. The UE according to claim 2, wherein the controller processes the identification data, the signal strength data, and data relating to a relationship between signal strength and distance to determine a geographical location of a fixed wireless node, and the update data includes the determined geographical location of the fixed wireless access node,
and optionally
wherein the transceiver receives the data relating to a relationship between signal strength and distance from the server system.

5. The UE according to claim 1, wherein the UE further comprises a replica database derived from at least part of the stored database of the fixed wireless nodes, and the update data is derived at least in part by processing in relation to the replica database,
and optionally
wherein the controller compares the derived identification data with identification data of the replica database, determines from new fixed wireless nodes, if any, for which the derived identification data does not match an entry in the replica database, based on the comparison, and determines missing wireless nodes, if any, for which an entry in the replica database does not match the derived identification data, based on the comparison.

6. The UE according to claim 1, wherein the controller monitors the signals depending on at least one predetermined condition of the UE relating to availability of resources at the UE,
and optionally
wherein the at least one predetermined condition includes a condition relating to utilization of communication resources being below a threshold,
or
wherein the at least one predetermined condition includes a condition relating to utilization of a processor in the UE being below a threshold,
or
wherein the controller monitors the signals depending on the at least one predetermined condition, when an absence of headphones at the UE is detected,
or
wherein the controller monitors the signals depending on the at least one predetermined condition, when usage of a grip sensor is below a threshold,
or
wherein the at least one predetermined condition includes a condition relating to a battery charge level being above a threshold.

7. The UE according to claim 1, wherein the controller intermittently monitors the signals, with a predetermined time interval between monitoring events,
or
wherein the controller monitors the signals depending on at least a determination that a location of the UE has changed by more than a predetermined minimum distance from a location at which signals have been previously monitored by the UE,
or
wherein the controller monitors signals depending on at least a determination that a location of the UE has changed by less than a predetermined maximum distance from a location at which signals have been previously monitored by the UE.

8. The UE according to claim 1, wherein the controller comprises a service component for controlling a handover of the UE between different radio access networks, and the service component monitors the broadcast signals, derives the identification data, and generates the update data,
and optionally
wherein the service component includes a Media Independent Handover (MIH) client.

9. The UE according claim 1, wherein the wireless network includes a second radio access network operating according to a second radio access technology,
the UE communicates using the second radio access technology, and
the UE transmits the update data using the second radio access technology, and optionally
wherein the first radio access technology includes an IEEE 802.11 technology and the second radio access technology includes a cellular wireless technology.

10. A User Equipment (UE) for use in a wireless network including a first radio access network supporting a first radio access technology and a server system including a stored database of wireless nodes, the stored database identifying fixed wireless nodes that are geographically dispersed and that broadcast a signal including identification data, the UE comprising:
a transceiver for communicating using the first radio access technology;
a position determination unit for determining a geographic location; and
a controller for accessing data derived from the stored database, monitoring broadcast signals received using the first radio access technology, deriving identification data and signal strength data of the fixed wireless nodes from the received broadcast signals, generating update data from the identification data, signal strength data, and geographical location data relating to the UE, and transmitting the update data to the server system in order to update the stored database of the fixed wireless nodes,
wherein the position determination unit determines the geographical location by processing the signal strength data, the identification data corresponding to the received broadcast signals, and data relating to a relationship between signal strength and distance.

11. The UE according to claim 10, wherein the position determination unit includes a relative navigation system for estimating, based on a sensor in the UE, a geographical location of the UE relative to a previously determined geographical location,
the sensor including at least one of a compass, an accelerometer, a pedometer, and an altimeter,
and optionally
wherein the UE downloads location data indicating preferred monitoring locations from the server system, and monitors the signals depending on a determination that a geographical location of the UE corresponds to one of said preferred monitoring locations.

12. The UE according to claim 11, wherein the controller compiles location data indicating preferred monitoring locations based on a motion history the UE, the preferred monitoring locations relating to geographical locations at which the direction of motion of the UE has changed direction by more than a predetermined amount,
and optionally
wherein the compiled location data includes an identifier of a floor of a building,
or
wherein the compiled location data includes a plan of a building,
or
wherein the transceiver transmits the compiled location data to the server system.

13. A server system for use with a wireless network and a plurality of User Equipments (UEs), the wireless network including a first radio access network supporting a first radio access technology, the UEs communicating using the first radio access technology, determining geographical locations, and accessing data derived from the server system, the server system comprising:
a stored database of wireless nodes, the stored database identifying fixed wireless nodes that are geographically dispersed and that broadcast a signal including identification data; and
a controller for selecting a UE from which information is required to update the stored database, sending an update request to the selected UE requesting the selected UE to monitor broadcast signals received using the first radio access technology, and updating the stored database of the fixed wireless nodes using update data from the selected UE,
wherein the selected UE derives identification data and signal strength data of the fixed wireless nodes from the received broadcast signals, generates the update data from the identification data, signal strength data, and geographical location data relating to the UE, and transmits the update data to the server system.

14. The server system according to claim 13, wherein the update data relates to signal strength data and identification data corresponding to the received broadcast signals and to geographical locations of the UE at which the broadcast signals were received, and the controller processes the update data to determine a geographical location of a fixed wireless node based on a relationship between received signal power and distance from the fixed access node,
and optionally
wherein the server system receives update data from a plurality of UEs, and the controller updates the database based on the update data from each of the plurality of UEs,
or
wherein the server system comprises a Media Independent Handover (MIH) server.

15. A User Equipment (UE) for use in a wireless network, the UE comprising:
a position determination unit for determining a geographical locationusing a relative navigation system that estimates, by using a sensor the UE, a geographical location of the UE relative to a previously determined geographical location; and
a controller for storing reference information relating to a plurality of different reference locations in a geographical area and estimating the geographical location of the UE based on a determination of the geographical location using the reference information,
and optionally
wherein the sensor includes at least one of a compass, an accelerometer, a pedometer, and an altimeter,
or
wherein the UE downloads the reference information from a server system,
or
wherein the reference information includes a plan of a geographical area.

16. A User Equipment (UE) for use in a wireless network, the UE comprising:
a position determination unit for determining a geographical location using a navigation system; and
a controller for compiling reference information based on a history of locations of the UE,
and optionally
wherein compiled reference information includes an identifier of a floor of a building,
or
wherein compiled reference information comprises an estimated plan of a geographical area,
or
wherein the UE estimates the geographical location of the UE based on a a determination of the geographical location in relation to compiled reference information,
or
wherein the UE transmits the compiled reference information to a server system.
